# EUROPEAN PATENT APPLICATION

(11) **EP 4 553 636 A1**
(43) Date of publication of application: **14.05.2025**
(21) Application number: 24196926.0
(22) Date of filing: 28.08.2024
(51) Int. Cl.: G06F 3/06, G06F 12/0868, G06F 12/0831

(54) **STORAGE DEVICE BASED ON CXL INTERFACE, OPERATING METHOD OF STORAGE DEVICE, HOST DEVICE INCLUDING THE SAME, AND OPERATING METHOD OF HOST DEVICE**

(30) Priority: 09.11.2023 KR 20230154301
(71) Applicant: Samsung Electronics Co., Ltd., Gyeonggi-do, 16677 (KR)
(72) Inventor: JI, Soo-Young, 16677 Suwon-si, Gyeonggi-do (KR)
(74) Representative: Kuhnen & Wacker Patent- und Rechtsanwaltsbüro PartG mbB

(57) **Abstract**

Disclosed is a method which is performed by a controller (300) of a storage device (200_1) including a nonvolatile memory (210). The method includes constructing, at the controller (300), a data structure including at least one of performance information of the storage device (200_1) and network routing information about a network where the storage device (200_1) is located, and transmitting, at the controller (300), the data structure to the host device (100) based on a cache coherence protocol.

## Description

### BACKGROUND

A nonvolatile memory device, which is a kind of semiconductor memory device, includes a flash memory device. The nonvolatile memory device may be used as a non-transitory storage device. To access the nonvolatile memory device, a host device communicates with a controller of a storage device in compliance with the interface protocol.

The host device and peripheral devices are capable of communicating with each other by using various host-to-device communication interfaces. Some of the host-to-device communication interfaces may be based on the PCIe (Peripheral Component Interconnect Express), and with the development of interfaces, the number of peripheral devices which the host device manages may greatly increase. Accordingly, storage devices are desired to efficiently perform input/output workloads of a server device in an environment where a large number of storage devices communicate with the host device.

### SUMMARY

The present disclosure provides a storage device capable of efficiently performing a workload, a host device including the same, an operating method of the storage device, and an operating method of the host device. The present disclosure relates to a storage device based on a CXL (Compute Express Link) interface, a host device including the same, an operating method of the host device, and an operating method of the storage device.

In general, a first aspect includes a method performed by a controller of a storage device including a nonvolatile memory. The method may include: constructing, at the controller, a data structure including at least one of performance information of the storage device and network routing information about a network where the storage device is located, and transmitting, at the controller, the data structure to the host device based on a cache coherence protocol.

Another general aspect includes a method performed by a host device communicating with a plurality of storage devices each including a nonvolatile memory. The method may include: receiving, at the host device, a data structure including at least one of performance information and network routing information from each of the plurality of storage devices based on a cache coherence protocol, determining, at the host device, at least one storage device, which will perform a workload, from among the plurality of storage devices based on the data structure of each of the plurality of storage devices, and placing, e.g. assigning, at the host device, the workload to the at least one storage device. For example, determining the at least one storage device that is configured to perform the workload comprises: classifying, by the host device, the plurality of storage devices into a plurality of groups based on at least one of the performance information or the network routing information; and assigning, by the host device, the workload to at least one group among the plurality of groups. For example, classifying the plurality of storage devices into the plurality of groups comprises: classifying the plurality of storage devices into the plurality of groups based on the data structure being provided from each of the plurality of storage devices; and based on an updated data structure being provided from at least one of the plurality of storage devices, classifying the plurality of storage devices into a plurality of updated groups.

Another general aspect includes a storage device including: a buffer memory, at least one nonvolatile memory device that stores or read data, a controller that communicates with a host device and to control the at least one of nonvolatile memory device based on a workload transmitted from the host device, and an infrastructure management unit that constructs a data structure including at least one of workload execution performance information and network routing information, and the controller may transmit the data structure to the host device based on a cache coherence protocol. For example, the storage device comprises a computational accelerator. For example, the controller is configured to: transmit a device-to-host (D2H) write request for a memory device of the host device to the host device through a D2H request message of a compute express link (CXL) cache (CXL.cache) protocol; and based on receiving a response of the host device to the D2H write request, transmit a D2H data message to the host device through a D2H data channel of the CXL.cache protocol, the D2H data message including the data structure.

Another general aspect includes a host device configured to communicate with a plurality of storage devices each including a nonvolatile memory. The host device may include: a processor, a volatile memory device that stores an instruction executable by the processor, and a home agent that manages a cache coherence between a cache memory of each of the plurality of storage devices and the volatile memory device. The home agent may receive a data structure including at least one of performance information and network routing information from each of the plurality of storage devices based on a cache coherence protocol, may determine at least one storage device, which will perform a workload, from among the plurality of storage devices based on the data structure, and may place, e.g. assign, the workload to the at least one storage device.

### BRIEF DESCRIPTION OF THE DRAWINGS

FIG. 1 is a block diagram illustrating an example of a computing system including a storage device.
FIG. 2 is a diagram illustrating an example of a configuration of a controller of a storage device.
FIG. 3 is a block diagram illustrating an example of a CXL interface circuit.
FIG. 4 is a diagram illustrating an example of CXL-based channels of a computing system including a storage device.
FIG. 5 is a diagram illustrating an example of a message transferring a data structure from a storage device to a host device.
FIG. 6 is a diagram illustrating an example of a data structure.
FIG. 7 is a diagram illustrating an example of a configuration of a nonvolatile memory device of a storage device.
FIG. 8 is a flowchart of an example of an operating method of a storage device, in which the storage device transmits a data structure to a host device.
FIG. 9 is a flowchart describing an example of an operation of transmitting a data structure in an operating method of a storage device.
FIG. 10 is a flowchart of an example of an operation of transmitting a data structure in an operating method of a storage device.
FIG. 11 is a flowchart describing an example of an operating method in which a host device places a workload based on a data structure transmitted from a storage device.
FIG. 12 is a flowchart illustrating an example of an operation in which a host device determines a placement of a workload for a storage device.
FIGS. 13A and 13B are diagrams of an example of an operation in which the host device of FIG. 12 determines a storage device with regard to placement of a workload.
FIG. 14 is a flowchart illustrating an example of an operation in which a host device determines a workload for a storage device.
FIG. 15 is a diagram illustrating an example of an operation in which the host device of FIG. 14 determines a placement of a workload for a storage device.
FIGS. 16A and 16B are diagrams describing an example of an operation of placing, e.g. assigning, a workload in an operating method of a host device.
FIG. 17 is a diagram illustrating an example of a storage device and an example of a data structure.
FIG. 18 is a block diagram illustrating an example of a computing system.
FIG. 19 is a block diagram illustrating an example of a data center to which a computing system is applied.

### DETAILED DESCRIPTION

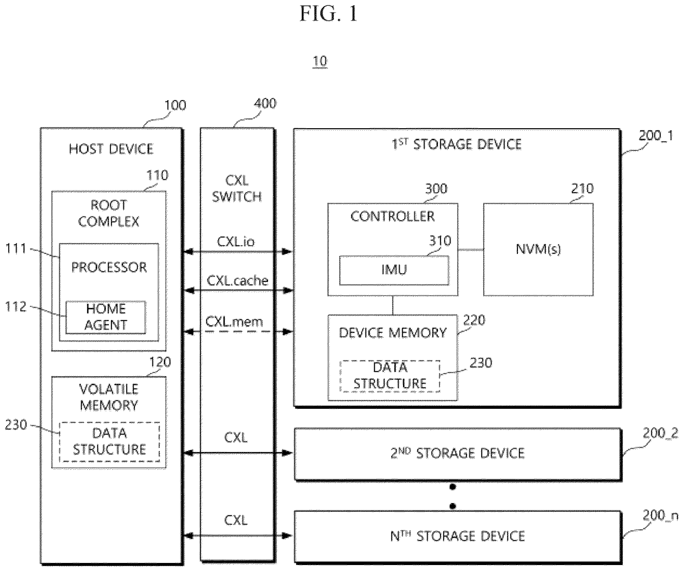

FIG. 1 is a block diagram illustrating an example of a computing system including a storage device.

A computing system 10 communicates with a plurality of storage devices 200_1, 200_2, ..., 200_n and places a workload to at least one of the plurality of storage devices 200_1, 200_2, ..., 200_n. Each of the plurality of storage devices 200_1, 200_2, ..., 200_n may generate a data structure 230 including at least one of performance information and network routing information. The generated data structure 230 may be temporarily stored in a device memory 220. For example, the data structure 230 may be stored in a partial memory region of the device memory 220, which is specified by the CXL.cache protocol. Alternatively, the generated data structure 230 may be stored in a partial region of a nonvolatile memory device 210. Alternatively, the generated data structure 230 may be stored in an internal cache memory of a controller 300. In the following examples, the description will be given under the condition that the data structure 230 is stored in a partial memory region of the device memory 220, which is specified by the CXL.cache protocol.

The data structure 230 generated by each of the plurality of storage devices 200_1, 200_2, ..., 200_n may be transmitted to a host device 100, and the host device 100 may place a workload based on the data structure 230.

Each of the plurality of storage devices 200_1, 200_2, ..., 200_n may transmit the data structure 230 to the host device 100 based on the cache coherence protocol. The cache coherence protocol may be the CXL.cache protocol based on the CXL interface. In the following examples, the description will be given as each of the plurality of storage devices 200_1, 200_2, ..., 200_n transmits the data structure 230 to the host device 100 by using the CXL.cache protocol. However, the cache coherence protocol may be an MSI (Modified, Shared, Invalid) protocol, an MESI (Modified, Exclusive, Shared, Invalid) protocol, an MOSI (Modified, Owned, Shared, Invalid) protocol, an MOESI (Modified, Owned, Exclusive, Shared, Invalid) protocol, a synapse protocol, Berkeley protocol, a Firefly protocol, a dragon protocol, etc. The CXL.cache is based on the MESI protocol.

The host device 100 may place a workload to at least one of the plurality of storage devices 200_1, 200_2, ..., 200_n based on the received data structure 230. Each of the plurality of storage devices 200_1, 200_2, ..., 200_n may directly access a volatile memory device 120 attached to the host device 100 and may directly store the data structure 230 in the volatile memory device 120 of the host device 100. Accordingly, without requesting the data structure 230 from each of the plurality of storage devices 200_1, 200_2, ..., 200_n, the host device 100 may directly retrieve the volatile memory device 120 and may determine a storage device, to which a workload is to be placed, based on the data structure 230 transmitted from each of the plurality of storage devices 200_1, 200_2, ..., 200_n. According to the above description, the host device 100 may quickly place a workload to a storage device, and the workload may be efficiently performed as the workload is placed based on the performance and/or network environment of each of the plurality of storage devices 200_1, 200_2, ..., 200_n.

The description will be given in detail with reference to FIG. 1. The computing system 10 includes the host device 100, the plurality of storage devices 200_1, 200_2, ..., 200_n, and a CXL switch 400. Configurations of the host device 100 and the first storage device 200_1 will be described with reference to FIG. 1. Configurations of the remaining storage devices including the second storage device 200_2 may be the same as or similar to the configuration of the first storage device 200_1.

Referring to FIG. 1, the host device 100 may include a root complex 110 and the volatile memory device 120.

The host device 100 may include a data center server, a cloud server, a personal computer, a laptop computer, etc. The host device 100 may be a computing device which includes a processor 111 configured to process data.

As a sub-system of the host device 100, the root complex 110 may include one or more processors 111, the volatile memory device 120, a memory controller, a network port, and a network interface. The root complex 110 may include a function for interconnection and/or bridge with internal components and/or peripheral devices. In the example of FIG. 1, the description will be given under the condition that the processor 111 is implemented inside the root complex 110, but the root complex 110 and the processor 111 may be independently implemented.

The processor 111 may be a central processing unit (CPU), an application-specific integrated circuit (ASIC), a field programmable gate array (FPGA), or any other type of processing device implemented by a software command, a micro code, and/or firmware. The processor 111 may include a plurality of processors.

A home agent 112 may adjust the cache coherence between the host device 100 and the first storage device 200_1 and may restrict or prevent collision between caching agents of peripheral devices. The home agent 112 may be a processor residing in a host processor or may be a separate logic circuit.

The root complex 110 is connected to the volatile memory device 120. The volatile memory device 120 may include a static random access memory (SRAM) or a dynamic random access memory (DRAM). The volatile memory device 120 may be implemented with a plurality of memory modules. The volatile memory device 120 may store an instruction which is executed by the processor 111. The volatile memory device 120 implemented with the SRAM may be a cache memory device. The cache memory device may cache a portion of data stored in the volatile memory device 120 implemented with the DRAM.

The first storage device 200_1 may be electrically connected to and used by the host device 100 and may include at least one nonvolatile memory device (NVMs) 210, the device memory 220, and the controller 300.

The first storage device 200_1 may be implemented in a state of being physically separated from the host device 100 or may be implemented with the form factor installed in the same package as the host device 100. For example, the first storage device 200_1 may be implemented based on the E1.S, E1.L, E3.S, E3.L, or PCIe AIC (CEM) form factor. Alternatively, the first storage device 200_1 may be implemented based on the U.2 form factor, the M.2 form factor, or any other shape of PCIe form factor.

The first storage device 200_1 may be coupled to communicate with any other components of the host device 100 through the storage interface bus and the CXL switch 400. In some implementations, the first storage device 200_1 may be directly installed in a physical port based on the CXL interface of the host device 100. For example, the physical port may be a PCIe physical port.

The storage interface bus may be, for example, a peripheral component interconnect express (PCIe) bus. The host device 100 may transmit data to and receive data from the first storage device 200_1 through the storage interface bus by using the storage interface protocol. Data may include user data and/or the data structure 230. As an example, a transmitter (e.g., the first storage device 200_1) can directly access a memory region of a receiver (e.g., the host device 100) and directly store data in the accessed memory region. The storage interface protocol may be, for example, a compute express link (CXL) or a non-volatile memory host controller express (NVMe).

The first storage device 200_1 may communicate with the host device 100 in compliance with the CXL interface protocol. The first storage device 200_1 may communicate with the host device 100 in compliance with the CXL input/output (CXL.io) protocol and the CXL.cache (CXL.cache) protocol. In some implementations, additionally, the first storage device 200_1 may communicate with the host device 100 by using the CXL memory (CXL.mem) protocol.

In the initial connection with the host device 100, the first storage device 200_1 may perform a device discovery, a configuration, an initialization, an input/output virtualization, and a direct memory access (DMA) by using the CXL.io protocol. The first storage device 200_1 may perform the transmission (i.e., an input and/or an output) of user data with the host device 100 by using the CXL.io protocol. In addition, the transmission of file-based user data may be performed by using the NVMe. Alternatively, In some implementations, the transmission of file-based user data may be performed by using the CXL.mem protocol. For example, the transmission of user data whose size is smaller than or equal to a specific size may be performed as follows. Data read from the nonvolatile memory device 210 may be divided into data of a preset size so as to be temporarily stored in the device memory 220, and the host device 100 may load the user data of the device memory 220 by using the CXL.mem protocol. The device memory 220 may be a volatile memory device.

As described above, like the first storage device 200_1, the second storage device 200_2 and the remaining storage devices may also communicate with the host device 100 in compliance with the CXL interface protocol including the CXL.io protocol, the CXL.cache protocol, and/or the CXL.mem protocol.

The first storage device 200_1 may include the controller 300, the device memory 220, and the nonvolatile memory device 210.

The controller 300 may control the nonvolatile memory device 210 to process or perform a workload. The nonvolatile memory device 210 may write, e.g., store or program, erase, and/or read data under control of the controller 300.

The nonvolatile memory device 210 may include a flash memory of a two-dimensional (2D) structure or a two-dimensional (3D) structure. The flash memory may include different kinds of nonvolatile memories such as a NAND flash memory, a vertical NAND (V-NAND) flash memory, a NOR flash memory, a magnetic RAM (MRAM), a phase-change RAM (PRAM), a ferroelectric random access memory (FRAM), a spin transfer torque random access memory (STT-RAM), and/or a resistive RAM (RRAM).

The device memory 220 may temporarily store data to be written in the nonvolatile memory device 210 or data read from the nonvolatile memory device 210. In some implementations, when the first storage device 200_1 uses the CXL.mem protocol for the purpose of transmitting user data to the host device 100, a partial region of the device memory 220 may be placed for a dedicated region of the first storage device 200_1, and the remaining region thereof may be set as a region which the host device 100 is capable of directly accessing.

In some implementations, the first storage device 200_1 may directly access a partial region of the volatile memory device 120 of the host device 100 by using the CXL.cache protocol and may cache data of the partial region. That is, the first storage device 200_1 may be a Type-1 CXL device or may be a Type-2 CXL device.

The first storage device 200_1 may access the partial region of the volatile memory device 120 of the host device 100 by using the CXL.cache protocol of the cache coherence protocol and may store the data structure 230 in the region accessed by using the CXL.cache protocol. For example, the first storage device 200_1 may store the data structure 230 in a memory region placed to the first storage device 200_1 from among the memory region of the DRAM device of the host device 100 by using the CXL.cache protocol, and the host device 100 may load the data structure 230 stored in the DRAM to the cache memory being the SRAM.

The data structure 230 may be generated by an infrastructure management unit (IMU) 310 of the controller 300. FIG. 1 will be described under the condition that the infrastructure management unit 310 is included in the controller 300, but the infrastructure management unit 310 may be implemented with a logic circuit independent of the controller 300.

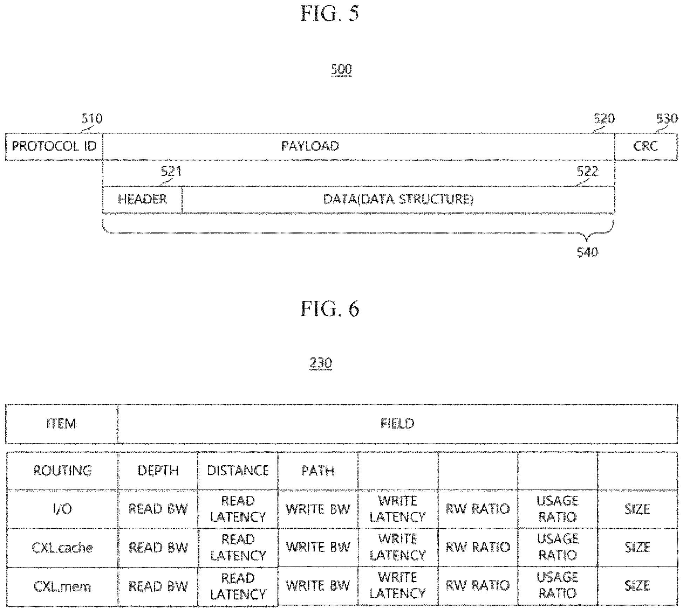

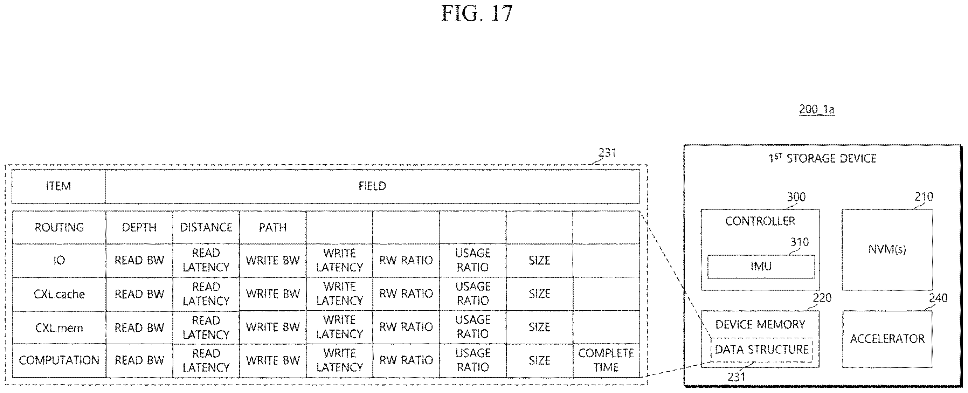

The infrastructure management unit 310 may generate the data structure 230 including at least one of the performance information of the first storage device 200_1 and the network routing information of the network where the first storage device 200_1 is placed. The performance information may include performance information about an input/output of the first storage device 200_1, performance information about the CXL.cache protocol, and/or performance information about the CXL.mem protocol. This will be described in detail with reference to FIG. 6. In some implementations, when the first storage device 200_1 includes any other component(s) associated with a workload, the data structure 230 may include performance information about the other component(s). For example, in FIG. 17, a storage device 200a may include an accelerator, and the data structure 230 may include performance information about the accelerator.

In some implementations, the host device 100 may determine at least one storage device, to which a workload is to be placed, from among the plurality of storage devices 200_1, 200_2, ..., 200_n by using the data structure 230, which the first storage device 200_1 stores in the volatile memory device 120 by using the CXL.cache protocol. In another example, the host device 100 may group the plurality of storage devices 200_1, 200_2, ..., 200_n by using the data structure 230. The host device 100 may store a grouping result as grouping information and may determine at least one storage device, to which a workload is to be placed, from among the plurality of storage devices 200_1, 200_2, ..., 200_n based on the grouping information. The workload means at least one input/output (I/O) to be placed to at least one of the plurality of storage devices 200_1, 200_2, ..., 200_n by the host device 100. Accordingly, the placement of workload means to direct at least one storage device to perform at least one input/output (I/O). The placement of workload may be made to distribute the workload requested by the host device 100. For example, when a request for a workload of video streaming is received from a user device, the workload of video streaming may be divided into a plurality of workloads (or inputs/outputs) so as to be placed to at least one of the plurality of storage devices 200_1, 200 2, ..., 200_n.

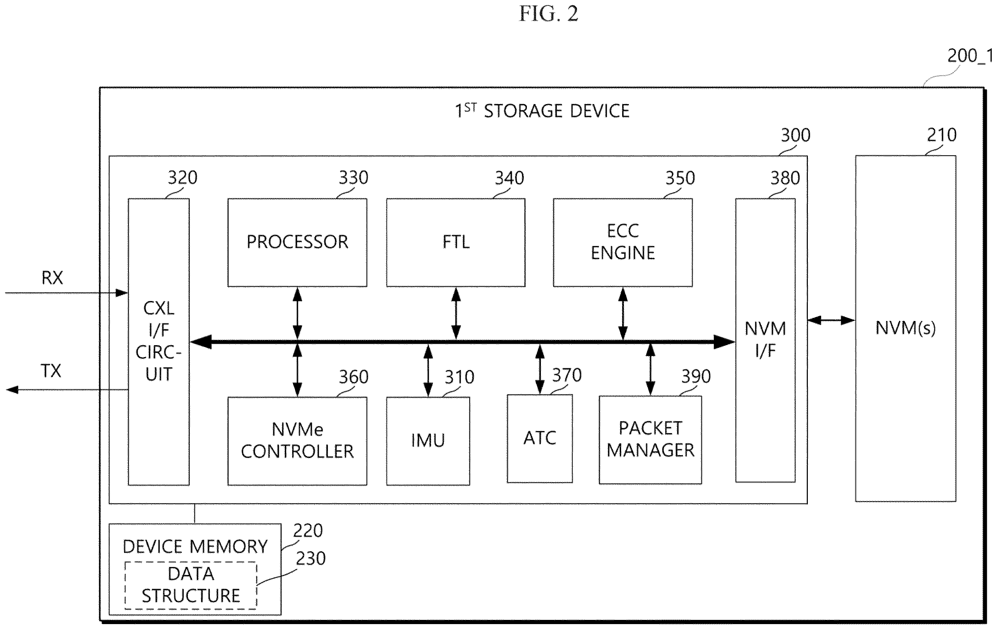

FIG. 2 is a block diagram illustrating an example of a configuration of the first storage device 200_1. A configuration of the first storage device 200_1 will be described in detail with reference to FIGS. 1 and 2. Referring to FIG. 2, the first storage device 200_1 may include the controller 300 and the at least one nonvolatile memory device 210.

The controller 300 may include the infrastructure management unit (IMU) 310, an CXL interface circuit 320, at least one processor 330, a flash translation layer (FTL) 340, an error correction code (ECC) engine 350, an NVMe controller 360, an address translation cache (ATC) 370, and a nonvolatile memory interface 380. The controller 300 may further include a working memory (not illustrated) to which firmware is loaded.

The controller 300 may communicate with the host device 100 through the CXL interface circuit 320.

The CXL interface circuit 320 may be implemented with various interfaces such as an advanced technology attachment (ATA) interface, a serial ATA (SATA) interface, an external SATA (e-SATA) interface, a small computer small interface (SCSI), a serial attached SCSI (SAS), a peripheral component interconnection (PCI) interface, a PCI express (PCIe) interface, an IEEE 1394 interface, a universal serial bus (USB) interface, a non-volatile host controller express (NVMe) interface, and a CXL interface. For example, the controller 300 may generate packets complying with the CXL protocol and may exchange the packets with the host device 100.

When the controller 300 communicates with the host device 100 by using the CXL protocol, the CXL.io protocol, the CXL.cache protocol, and/or the CXL.mem protocol may be used. The communication may be performed by transmitting packets through the PCIe bus. The controller 300 may transmit a result of performing a workload placed through the CXL interface circuit 320 to the host device 100. The packet may include a request, a response, and/or data which the host device 100 transmits or a request, a response, and/or data which the first storage device 200_1 transmits. The data may include user data to be stored in the nonvolatile memory device 210. The controller 300 may transmit a result of the workload to the host device 100 through the CXL interface circuit 320. In some implementations, the controller 300 may transmit a result of the workload to the host device 100 through the CXL switch 400.

The processor 330 may include at least one or more processors. The processor 330 may load the firmware of the first storage device 200_1 to the working memory and may perform an overall operation of the controller 300. The processor 330 may load the flash translation layer 340 to the working memory and may perform the write or read operation on the nonvolatile memory device 210 based on the flash translation layer 340.

The device memory 220 may temporarily store data to be written in the nonvolatile memory device 210 or data read from the nonvolatile memory device 210. In some implementations, the device memory 220 may be disposed inside or outside the controller 300.

The nonvolatile memory interface 380 may transmit data to be written in the nonvolatile memory device 210 to the nonvolatile memory device 210 or may receive data read from the nonvolatile memory device 210. The nonvolatile memory interface 380 may be implemented to comply with the standard protocol such as Toggle or ONFI.

The flash translation layer 340 may perform various functions such as address mapping, wear-leveling, and garbage collection.

The address mapping operation refers to an operation of translating a logical address of the first storage device 200_1 received from the host device 100 into a physical address to be used to actually store data in nonvolatile memory device 210. For example, a logical block address of user data which are requested by the host device 100 to be read may be translated into a physical address of the nonvolatile memory device 210 by using the flash translation layer 340.

The wear-leveling which is a technology for allowing blocks of the nonvolatile memory device 210 to be used uniformly such that excessive deterioration of a specific block is prevented may be implemented, for example, through a firmware technology for balancing erase counts of physical blocks. The garbage collection refers to a technology for securing an available capacity of the nonvolatile memory device 210 through a way to copy valid data of a block to a new block and to then erase the block.

The ECC engine 350 may perform an error detection and /or correction function on data read out from the nonvolatile memory device 210. Also, the ECC engine 350 may inject an error and correction code into user data to be stored in the nonvolatile memory device 210.

The packet manager 390 may generate the packet complying with an interface protocol negotiated with the host device 100 or may parse various kinds of information from the packet received from the host device 100.

In addition, although not illustrated in FIG. 2, the controller 300 may include an advanced encryption standard (AES) engine (not illustrated) which performs a security operation of data.

The controller 300 of the first storage device 200_1 may include the NVMe controller 360.

When a packet received from the host device 100 indicates the file-based transmission of user data using the CXL.io protocol, the NVMe controller 360 may decode an NVMe command included in the packet based on the NVMe protocol and may perform the file-based transmission based on the NVMe command.

The infrastructure management unit 310 may generate the data structure 230 including at least one of the performance information of the first storage device 200_1 and the network routing information of the network where the first storage device 200_1 is placed.

The performance information may include performance information about an input/output of the first storage device 200_1, performance information about the CXL.cache protocol, and/or performance information about the CXL.mem protocol.

In some implementations, the infrastructure management unit 310 may receive a plurality of test workloads during a preset time period from an external device, may perform the received workloads, and may generate the data structure 230 including the performance information based on a result of performing the workloads. In some implementations, the external device may be the host device 100, but the present disclosure is not limited thereto. For example, the external device may be an external device which performs a test work in a test process before the first storage device 200_1 is installed in the host device 100. The test workload may include at least one command. A test workload pattern such as Nexus, Financial1, Financial, YCSB, or VD1 may be used as a pattern of a test workload for an input/output. The performance information about the CXL.cache protocol and/or the CXL.mem protocol may be based on a result of performing a workload including a request which is based on the CXL.cache protocol and/or the CXL.mem protocol. The workload may include at least one request which is based on the CXL.cache protocol and/or the CXL.mem protocol, and each request may include an opcode associated with an operation requested for the first storage device 200_1.

The network routing information may include hardware locality information of the first storage device 200_1 on the network the first storage device 200_1 is placed.

In some implementations, the infrastructure management unit 310 may determine routing information about the first storage device 200_1 on the network by parsing a packet transmitted from the host device 100 and then received through the CXL interface and may generate the data structure 230 including the network routing information based on the determined routing information. Alternatively, the first storage device 200_1 may parse a packet received in a device discovery process of the host device 100 and may generate the data structure 230 including the network routing information.

The ATC 370 may be a table of mapping a virtual address (VA) of the memory region of the host device 100, which the first storage device 200_1 is capable of accessing, and a host physical address (HPA). The virtual address of the memory region of the host device 100 may be provided from the host device 100 in the initialization operation or power-up operation of the first storage device 200_1. For example, the host device 100 may place a portion of the memory region of the host device 100 to the first storage device 200_1 and may provide the first storage device 200_1 with memory address information (e.g., a logical address range or a virtual address range) of the allocated region.

In some implementations, the first storage device 200_1 may refer to the ATC 370 to translate the virtual address of the memory region of the host device 100 into a host physical address. When the virtual address is absent from the ATC 370 (i.e., when the virtual address does not coincide with virtual addresses of the ATC 370), the processor 330 may request an address translation service (ATS) from the host device 100 and may obtain the host physical address based on an ATS response of the host device 100. The obtained physical address may be used for a request (e.g., D2H REQ) for storing the data structure 230 in the host device 100.

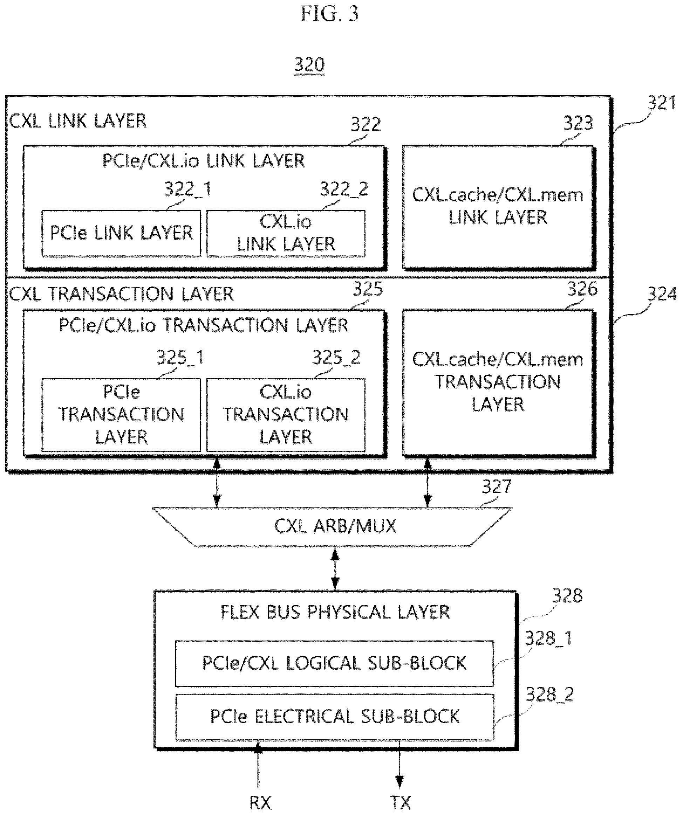

FIG. 3 is a block diagram illustrating the CXL interface circuit 320. The CXL interface circuit 320 of FIG. 3 may correspond to the CXL interface circuit 320 of FIG. 2.

The CXL interface circuit 320 may be implemented based on the CXL standard. The CXL interface circuit 320 may be implemented based on the CXL standard 1.1, 2.0 and/or 3.0 and may be based on later versions. The CXL interface circuit 320 includes a flex bus physical layer 328, a CXL arbiter/multiplexer (CXL ARB/MUX) 327, a CXL link layer 321, and a CXL transaction layer 324. The flex bus physical layer 328 may include a PCIe electrical sub-block 328_2 and a PCIe/CXI, logical sub-block 328_1. The PCIe electrical sub-block 328_2 may be used in common by the PCIe interface and the CXL interface. The PCIe/CXI, logical sub-block 328_1 may enter the PCIe mode at the time of performing initial link training. At the time of performing the recovery defined by the PCIe standard, the PCIe/CXI, logical sub-block 328_1 may enter the CXL interface mode or may return to the PCIe mode, depending on mode negotiation. The CXL arbiter/multiplexer 327 may transfer a request, which is transferred from the flex bus physical layer 328 in the PCIe mode and/or is based the CXL.io protocol associated with the input/output (I/O) in the CXL mode, to a PCIe/CXL.io link layer 322 of the CXL link layer 321 through the CXL transaction layer 324. The CXL arbiter/multiplexer 327 may transfer a cache transferred from the flex bus physical layer 328 in the CXL mode and/or a request based on the CXL.cache associated with a memory (mem) and a request based on the CXL.mem protocol, to a CXL.cache/CXL.mem link layer 323 of the CXL link layer 321.

The PCIe/CXL.io link layer 322 may include a PCIe data link layer 322_1 and a CXL.io link layer 333_2. The PCIe data link layer 322_1 may function as a data link layer in the PCIe mode. The CXL.io link layer 333_2 may function as a data link layer associated with the input/output (I/O) in the CXL mode.

The CXL transaction layer 324 may function based on the CXL link layer 321. The CXL transaction layer 324 may include a PCIe/CXL.io transaction layer 325 and a CXL.cache/CXL.mem transaction layer 326.

The PCIe/CXL.io transaction layer 325 may include a PCIe data transaction layer 325_1 and a CXL.io link layer 325_2. The PCIe data transaction layer 325_1 may function based on the PCIe data link layer 322_1. The CXL.io transaction layer 325_2 may function based on the CXL.io link layer 322_2. The CXL.cache/CXL.mem transaction layer 326 may function based on the CXL.cache/CXL.mem link layer 323.

The data structure 230 is based on the CXL.cache protocol. Accordingly, the data structure 230 may be provided to the processor 330 of FIG. 2 through the flex bus physical layer 328, the CXL arbiter/multiplexer 327, the CXL.cache/CXL.mem transaction layer 326, and the CXL.cache/CXL.mem link layer 323.

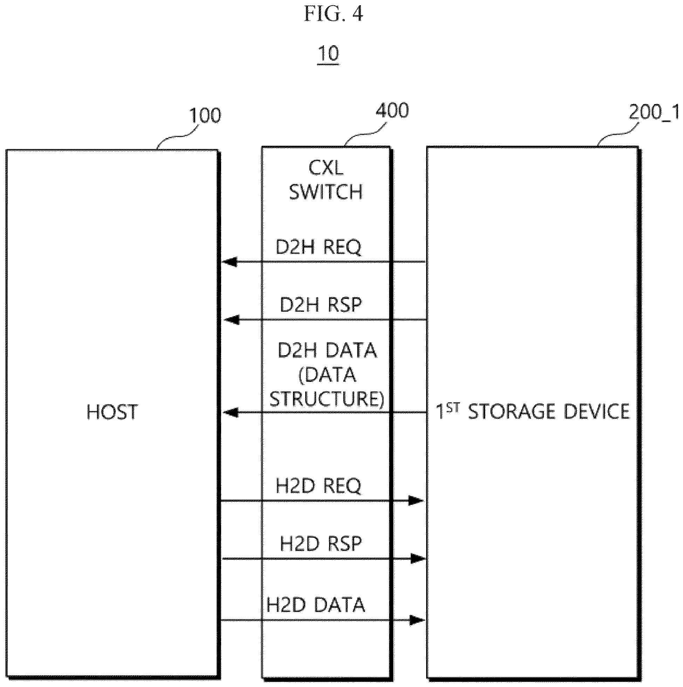

FIG. 4 is a diagram illustrating an example of channels through which a message based on the CXL interface of the computing system 10 including the first storage device 200_1 is transmitted. How the first storage device 200_1 and the host device 100 exchange messages with each other based on the CXL interface will be described in detail with reference to FIGS. 2 and 4. The transmission of a message between the host device 100 and the first storage device 200_1 may correspond to the transmission of a packet where the message is included.

Referring to FIG. 4, the first storage device 200_1 may communicate with the host device 100 through the CXL switch 400 by using request channels D2H REQ and H2D REQ, response channel D2H RSP and H2D RSP, and data channels D2H DATA and H2D DATA of the CXL interface. A direction of each channel may be classified as a device-to-host (D2H) direction or a host-to-device (H2D) direction. Accordingly, the communication may be performed by using a total of six channels.

The first storage device 200_1 may transmit a packet including a message to the host device 100 through the D2H request channel D2H REQ, the D2H response channel D2H RSP, and the D2H data channel D2H DATA whose directions correspond to the D2H direction. The host device 100 may transmit a packet including a message to the first storage device 200_1 through the H2D request channel H2D REQ, the H2D response channel H2D RSP, and the H2D data channel H2D DATA whose directions correspond to the H2D direction. In the following description, the transmission of a message may mean transmission of a packet where the message is included.

The controller 300 of the first storage device 200_1 may transmit a store request message to the host device 100 through the D2H request channel D2H REQ and may transmit a data message including the data structure 230 to the host device 100 through the D2H data channel D2H DATA.

The store request message may be a D2H request message requesting a store based on the CXL.cache protocol. For example, the D2H request message may be a D2H request message of a ReadO-Write type or a D2H request message of a Write type among request messages complying with the CXL.cache protocol. D2H request messages of a ReadO-Write type or a Write type are based on CXL.cache D2H semantics of CXL standard. The D2H request message requesting a store may include information about a host physical address of a memory region of the host device 100, in which the data structure 230 is to be stored based on the cache coherence, an operation corresponding to the D2H request, etc. The information about the operation corresponding to the D2H request requesting a store may be an opcode of the CXL.cache protocol, which is associated with a store. The opcode may be an opcode associated with at least one of ItoMWr, MemWr, CleanEvict, DirtyEvict, CleanEvictNoData, WOWrInv, WOWrInvF, and WrInv. The D2H request message including the opcode associated with ItoMWr and MemWr may be the D2H request message of the ReadO-Write type. The D2H request message including the opcode associated with at least one of CleanEvict, DirtyEvict, CleanEvictNoData, WOWrInv, WOWrInvF, and WrInv may be the D2H request message of the Write type.

In some implementations, when the first storage device 200_1 is based on the CXL protocol, the first storage device 200_1 may transmit the D2H data message including the data structure 230 depending on the H2D response from the host device 100. For example, the host device 100 may transmit an H2D response message, in which a GO message and a write pull message are combined, to the first storage device 200_1 in response to the D2H request message of the first storage device 200_1, in which the ItoMWr or MemWr opcode requesting a store is included. The first storage device 200_1 may transmit the D2H data message including the data structure 230 in response to the H2D response message of the host device 100, in which the GO message and the write pull message are combined.

The data message including the data structure 230 may be the D2H data message for transferring data based on the CXL.cache protocol. The D2H data message may include a header and the data structure 230.

FIG. 5 is a diagram illustrating a data flit which is transmitted from the first storage device 200_1 to the host device 100. A data flit 500 may include the data structure 230. The data flit 500 may include the D2H data message which is used for the first storage device 200_1 to transmit the data structure 230 to the host device 100 based on the CXL.cache protocol. The data flit 500 where the D2H data message for transferring the data structure 230 is included will be described with reference to FIGS. 2, 3, 4, and 5.

In the CXL interface circuit 320 of the first storage device 200_1 (refer to FIG. 2) In some implementations, the CXL.cache/CXL.mem link layer 323 of the CXL link layer 321 of FIG. 3 may provide the CXL.cache/CXL.mem transaction layer 326 of FIG. 3 with a message 540 where a header 521 of FIG. 5 and data 522 of FIG. 5 composed of the data structure 230 are included.

The CXL.cache/CXL.mem transaction layer 326 of the CXL transaction layer 324 of FIG. 3 may configure a payload of the data flit 500 by using the message 540 of FIG. 5. The data flit 500 where the payload, a protocol ID, and a CRC are included may be provided to the flex bus physical layer 328 through the CXL arbiter/multiplexer 327 of FIG. 3. The flex bus physical layer 328 may transmit, as an electrical signal, a packet associated with the data flit 500 to the host device 100 based on the PCIe standard.

FIG. 6 is a diagram illustrating the data structure 230. The data structure 230 of FIG. 6 may correspond to the data structure 230 of FIGS. 1, 2, 4, and 5. The data structure 230 will be described with reference to FIGS. 1, 2, and 6.

The data structure 230 may include a plurality of items and a plurality of fields associated with each of the plurality of items. Each of the plurality of fields of the data structure 230 may include a relevant field value.

The plurality of items may be information associated with at least one of the performance information of the first storage device 200_1 and the network routing information of the network where the first storage device 200_1 is placed.

In some implementations, the network routing information may include at least one of a network depth field DEPTH where the first storage device 200_1 is placed, a network distance field DISTANCE between the first storage device 200_1 and the host device 100, a connection path field PATH between the first storage device 200_1 and the host device 100, and the data structure 230 may include a field value associated with the field of the network routing information.

For example, the network depth "DEPTH" may mean the number of gateways placed on a message transmission path between the first storage device 200_1 and the host device 100 and/or the number of domain name servers (DNS) placed on the message transmission path. The network distance "DISTANCE" may mean the number of network switches placed on the message transmission path between the first storage device 200_1 and the host device 100 and/or the number of CXL switches placed on the message transmission path. The connection path "PATH" may mean the number of entities placed on the message transmission path between the first storage device 200_1 and the host device 100.

The network routing information of the data structure 230 may be updated when the network structure between the first storage device 200_1 and the host device 100 is changed. For example, the infrastructure management unit 310 of FIG. 2 may parse a packet that is transmitted from the host device 100 and is received through the CXL interface and may determine whether information about hardware locality of the first storage device 200_1 on the network is changed. When it is determined that the information about hardware locality is changed, the first storage device 200_1 may update the data structure 230 and may again transmit the updated data structure 230 to the host device 100.

In some implementations, the performance information may include at least one of input/output (I/O) performance, CXL.cache execution performance, and CXL.mem execution performance of the first storage device 200_1.

The input/output (I/O) performance may include at least one of a read bandwidth field READ BW, a read latency field READ LATENCY, a write bandwidth field WRITE BW, a write latency field WRITE LATENCY, a read/write ratio field RW RATIO, a usage ratio field USAGE RATIO, and a block size field SIZE, and the data structure 230 may include a field value associated with the performance information field. In addition, the input/output (I/O)-related field may include indexes associated with a throughput, a write QoS, a read QoS, or reliability. The write QoS and the read QoS may include a write latency percentile and a read latency percentile. The latency percentile may be in the 99% latency percentile, in the 99.99% latency percentile, etc.

In some implementations, the item associated with the input/output (I/O) performance may be composed of a plurality of items depending on a feature of a workload. For example, the input/output (I/O) performance may be divided into a plurality of items associated with different input/output (I/O) performance depending on workload features such as a queue depth (DQ), a write ratio, and whether it is a random workload and may include a plurality of fields every item.

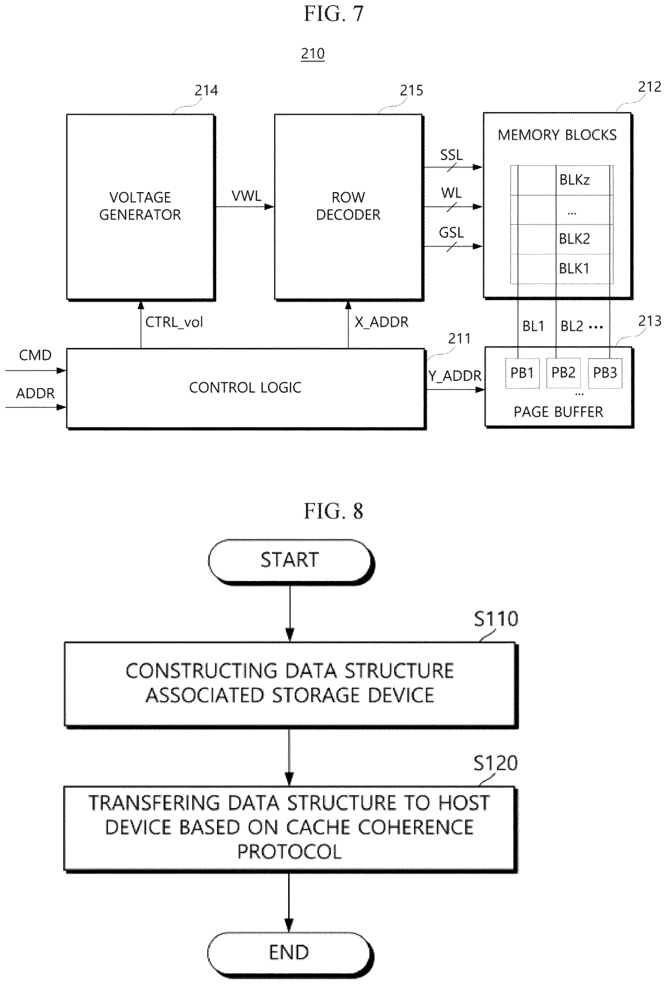

FIG. 7 is a diagram illustrating an example of a configuration of the nonvolatile memory device 210 of the first storage device 200_1. The nonvolatile memory device 210 will be described with reference to FIGS 1 and 7.

The nonvolatile memory device 210 includes a control logic circuit 211, memory blocks 212, a page buffer 213, a voltage generator 214, and a row decoder 215. The nonvolatile memory device 200 may include components of a memory device of a well-known solid state drive, such as a memory interface circuit, column logic, a pre-decoder, a temperature sensor, a command decoder, and an address decoder.

The control logic circuit 211 may overall control various kinds of operations of the nonvolatile memory device 210. The control logic circuit 211 may output various kinds of control signals in response to a command CMD and/or a physical address ADDR from the memory interface circuit. For example, the control signals may include a voltage control signal CTRL_vol, a row address X_ADDR, and a column address Y_ADDR.

The memory blocks 212 may include a plurality of memory blocks BLK1 to BLKz (z being a positive integer), and each of the plurality of memory blocks BLK1 to BLKz may include a plurality of memory cells. The memory blocks 212 may be connected to the page buffer 213 through bit lines (BL1, Bl2,...) and may be connected to the row decoder 215 through word lines WL, string selection lines SSL, and ground selection lines GSL.

The page buffer 213 may include a plurality of page buffers PB1 to PBn (n being an integer of 3 or more), and the plurality of page buffers PB1 to PBn may be respectively connected to memory cells through the bit lines. The page buffer 213 may select at least one bit line among the bit lines in response to the column address Y_ADDR. The page buffer 213 may operate as a write driver or a sense amplifier depending on an operation mode. For example, in the program (or write) operation, the page buffer 213 may apply a bit line voltage corresponding to data to be programmed to the selected bit line. In the read operation, the page buffer 213 may sense a current or a voltage of the selected bit line to read data stored in a memory cell.

The voltage generator 214 may generate various kinds of voltages for performing the program, read, and erase operations based on the voltage control signal CTRL_vol.

In response to the row address X_ADDR, the row decoder 215 may select one of the plurality of word lines and may select one of the plurality of string selection lines.

The nonvolatile memory device 210 may store or read user data in or from the memory blocks 212 depending on a workload which the host device 100 of FIG. 1 places to the first storage device 200_1 based on the data structure 230.

FIG. 8 is a flowchart describing an operating method of a storage device, in which the storage device transmits a data structure to a host device. In the example depicted in FIG. 8, a storage device and/or a host device may correspond to the first storage device 200_1 and/or the host device 100 described with reference to FIGS. 1 to 7.

In operation S 110, the storage device may construct a data structure including at least one of performance information and network routing information of the storage device. The data structure may be the data structure described with reference to FIG. 6.

In operation S120, the storage device may transmit the constructed data structure to the host device based on the cache coherence protocol. The cache coherence protocol may be, for example, the CXL.cache protocol.

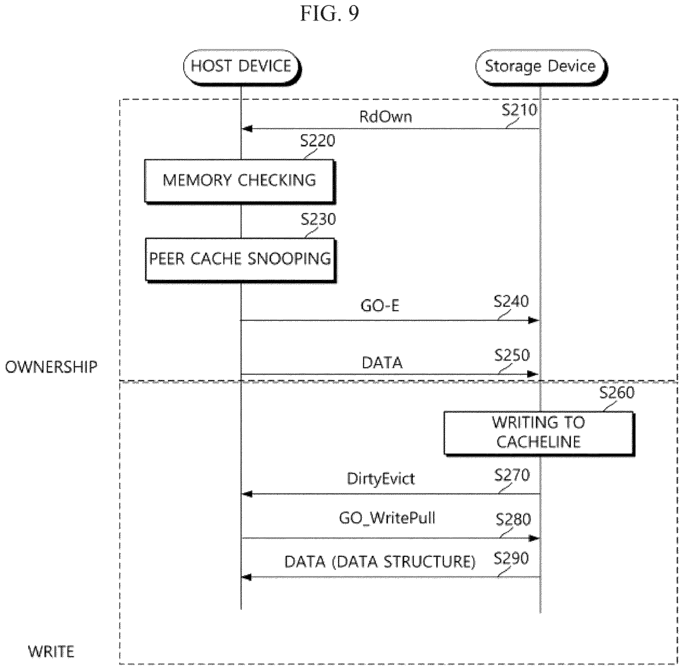

FIG. 9 illustrates an operation in which a storage device transmits a data structure constructed by using a Write-type D2H request message of a cache coherence protocol to a host device.

Referring to FIG. 9, an operation in which a storage device transmits a data structure may include an operation of requesting a store authority for a memory region of a host device and an operation of requesting the store of data in a memory device of the host device as separate operations after the authority is granted. In response to granting the authority, a response to the data store request is received from the host device, the storage device may transmit the data structure to the host device.

The operation of requesting the store authority for the memory region of the host device may include a step OWNERSHIP where the storage device requests a storage authority for a partial region (or a cache line) of a memory address of the host device based on the CXL.cache protocol. The operation of transmitting the data structure to the host device after the authority is granted may include a step WRITE where the storage device transmits the data structure at the authority-granted memory address.

In some implementations, the store authority for the memory address of the host device may be performed based on a D2H read request message D2H READ of the CXL.cache protocol, and the transmission of the data structure may be performed on a D2H write request message D2H WRITE of the CXL.cache protocol. How the store authority request is transmitted based the D2H read request message D2H READ including an RdOwn opcode and the data structure is transmitted based on the D2H write request message D2H WRITE including an DirtyEvict opcode will be described with reference to FIG. 9.

In operation S210, the storage device may change a state of a cache line to an invalid (I) state and may transmit the D2H read request message D2H READ including the RdOwn opcode to the host device.

In operation S220, the host device may check data of a first memory address of a memory device (e.g., a DRAM) of the host device, which are read requested by the storage device.

In operation S230, the host device may change a state of a cache line of the host device associated with a first memory address region or a cache line of peripheral devices from a shared (S) state to an invalid (I) state by checking the cache line of the host device or the cache line of the peripheral devices and transmitting a CXL.cache-based snooping message.

In operation S240, the host device may transmit a CXL.cache-based GO-E message to the storage device. The storage device may change the state of the cache line from the invalid (I) state to an exclusive (E) state in response to receiving the GO-E message.

In operation S250, the host device may transmit a CXL.cache-based data message to the storage device.

The storage device may obtain the authority of the cache line where the data structure is to be stored through operation S210 to operation S250.

In operation S260, the storage device may write the data structure in the cache line. After the storage device writes the data structure, the storage device may change the state of the cache line from the exclusive (E) state to a modified (M) state.

In operation S270, the storage device may request the store of data in the memory device of the host device. The storage device may transmit the D2H write request message D2H WRITE including an DirtyEvict opcode to the host device.

In operation S280, the host device may transmit a GO_WritePull message to the storage device in response to receiving the D2H write request message D2H WRITE including the DirtyEvict opcode.

In operation S290, the storage device may change the state of the cache line from the modified (M) state to the invalid (I) state and may transmit the D2H data message including the data structure to the host device.

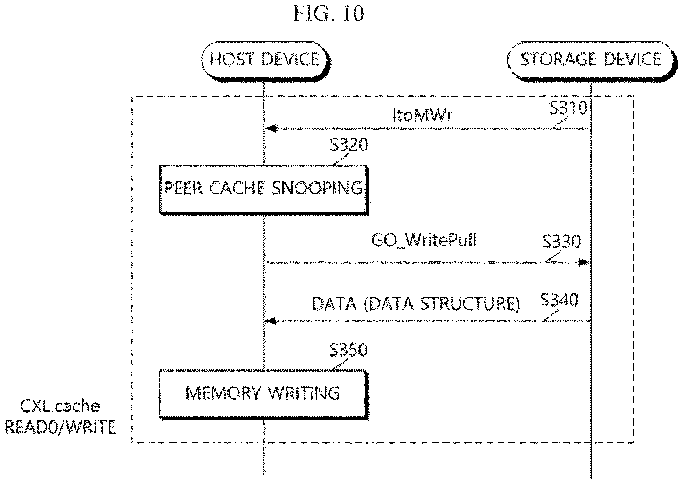

FIG. 10 illustrates an example of an operation in which a storage device transmits a data structure constructed by using a ReadO-Write type D2H request message of a cache coherence protocol to a host device.

Referring to FIG. 10, an operation in which a storage device transmits a data structure may include an operation of requesting a store authority for a memory region of a host device and an operation of requesting to store data in a memory device of the host device as one operation after the authority is granted.

In operation S310, the storage device may change a state of a cache line to the invalid (I) state and may transmit the D2H write request message D2H WRITE including an ItoMWr opcode and a second address to the host device.

In operation S320, the host device may change a state of a cache line of the host device associated with a second memory address or a cache line of peripheral devices from the shared (S) state to the invalid (I) state by checking the cache line of the host device or the cache line of the peripheral devices and transmitting the CXL.cache-based snooping message.

In operation S330, the host device may transmit the GO_WritePull message to the storage device in response to receiving the D2H write request message D2H WRITE including the ItoMWr opcode.

In operation S340, the storage device may transmit the D2H data message D2H DATA including the data structure to the host device in response to receiving the GO_WritePull message.

In operation S350, the host device may store the received data structure in the memory device of the host device.

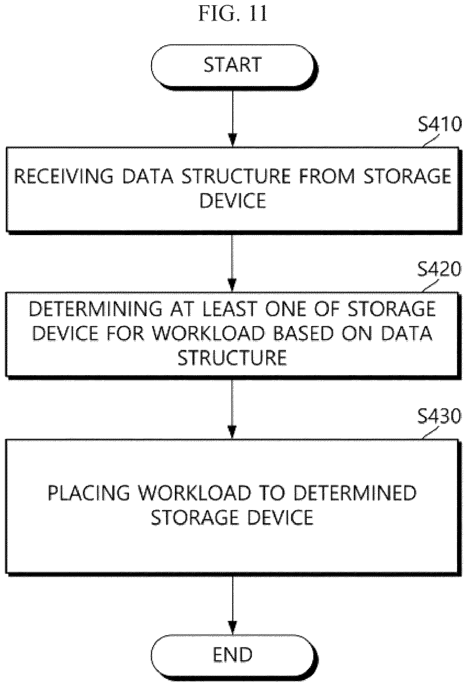

FIG. 11 is a flowchart illustrating an example of an operating method in which the host device 100 places a workload to at least one of the plurality of storage devices 200_1, 200_2, ..., 200_n based on a data structure received from the first storage device 200_1. A workload placing, e.g., assigning, method of the host device 100 may be performed by the host device 100 described with reference to FIGS. 1 to 7. An operating method in which the host device 100 places a workload will be described with reference to FIGS. 1 to 7 and 11.

In operation S410, the host device 100 receives the data structure 230 from each of the plurality of storage devices 200_1, 200_2, ..., 200_n. The data structure 230 may correspond to the data structure 230 of FIG. 6. The data structure 230 may include a plurality of items associated with performance information and/or network routing information. Each of the plurality of items may include a plurality of fields associated with the performance information and/or the network routing information. The data structure 230 may include a field value associated with each of the plurality of storage devices 200_1, 200_2, ..., 200_n.

The host device 100 may receive the data structure 230 from each of the plurality of storage devices 200_1, 200_2, ..., 200_n based on the cache coherence protocol. The cache coherence protocol may be the CXL.cache protocol, but a kind of the cache coherence protocol is not particularly limited thereto.

In operation S420, the host device 100 may determine which storage devices are suitable to perform a workload based on the performance information and/or the network routing information, from among the plurality of storage devices 200_1, 200_2,..., 200_n based on the data structure 230 received from the first storage device 200_1. In some implementations, the determining of the storage devices may be performed before the host device 100 receives a request for the workload from the external device or after the host device 100 receives the request for the workload from the external device.

In some implementations, the storage devices that have similar performance information and/or similar network routing information may be determined as the same group based on the data structure 230. With regard to workload features, the host device 100 may perform grouping differently by using a plurality of criteria. Information indicating how the plurality of storage devices 200_1, 200_2, ..., 200_n are grouped may be stored as grouping information. When the host device 100 receives a request for a specific workload based on the grouping information, the host device 100 may place at least a portion of the specific workload to at least one of grouped storage devices by using the grouping information associated with a feature of the specific workload.

In another example, the host device 100 may receive a request for the specific workload and may compare a preset field reference value of the data structure 230 with a field value of the data structure 230 of each of the plurality of storage devices 200_1, 200_2, ..., 200_n in consideration of the feature of the workload. Alternatively, the host device 100 may determine fields associated with the feature of the workload based on a preset algorithm and may compare the preset field reference value with the field value of the data structure 230 of each of the plurality of storage devices 200_1, 200_2, ..., 200_n. The host device 100 may place at least a portion of the specific workload to at least one of the determined storage devices.

Workloads may be classified into different workloads when feature values such as an input/output (I/O) kind, a read/write ratio, a block size, and a queue depth are different. In addition, in some implementations, when feature values of workloads associated with any one feature are different, the workloads may be classified into different workloads. Alternatively, when feature values of workloads associated with a plurality of features are different, the workloads may be classified into different workloads. In some implementations, a feature of a workload may include an I/O chuck size, an I/O interval, etc. For example, features of workloads being different may mean that a plurality of workloads have different feature values associated with at least one among a plurality of features.

In operation S430, the host device 100 may place at least a portion of the workload to at least one storage device selected from the plurality of storage devices 200_1, 200_2, ..., 200_n. The host device 100 may place the workload to at least one storage device based on at least one of the NVMe, the CXI,.io protocol, and the CXL.mem protocol.

The host device 100 may receive the data structure 230, which includes performance information and/or network routing information, from each of the plurality of storage devices 200_1, 200_2, ..., 200_n based on the cache coherence protocol. Accordingly, the host device 100 may quickly determine a storage device, which will perform a workload, using the performance information and/or the network routing information of each of the plurality of storage devices 200_1, 200_2, ..., 200_n, without increasing a read bandwidth associated with each of the plurality of storage devices 200_1, 200_2,..., 200_n.

Also, the host device 100 may determine a storage device, which will perform a workload, from among the plurality of storage devices 200_1, 200_2, ..., 200_n in consideration of the performance information and/or the network routing information. Accordingly, a speed at which a workload is performed may be improved.

Also, even in the case where the number of storage devices 200_1, 200_2, ..., 200_n increases, the host device 100 may determine a storage device, which will perform a workload, by using the performance information and/or the network routing information which each of the storage devices 200_1, 200_2, ..., 200_n actively transmits to the host device 100. Accordingly, the efficiency with which a workload is performed may be improved.

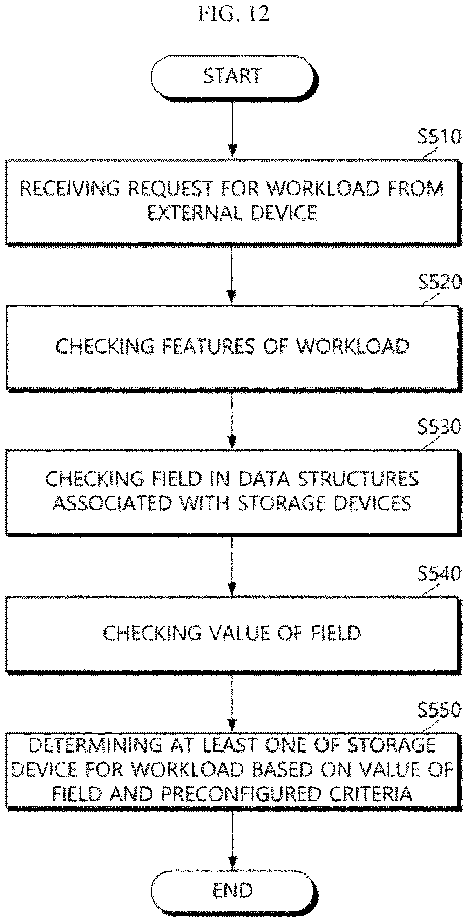

FIG. 12 is a flowchart illustrating an example of a method in which the host device 100 determines the placement of a workload for a storage device. A method in which the host device 100 determines a storage device may be performed by the host device 100 described with reference to FIGS. 1 to 7. The method in which the host device 100 determines a storage device will be described with reference to FIGS. 1 to 7 and 12.

In operation S510, the host device 100 may receive a request for execution of a workload from an external device. The external device may be a user device, a server device, etc., but a kind of the external device is not particularly limited thereto.

In operation S520, the host device 100 may check features of the requested workload. Features of workloads may be different for each request. For example, features such as an input/output (I/O) kind, a read/write ratio, a block size, and a queue depth may be different. The host device 100 may determine and store a value of at least one of a plurality of features of a requested workload or may classify the requested workload as a preset workload kind based on feature values.

In operation S530, the host device 100 may check fields associated with the workload in the data structure 230 associated with each of the plurality of storage devices 200_1, 200_2, ..., 200_n. For example, the host device 100 may check fields associated with the workload based on information set in advance with regard to each feature of the workload. Alternatively, the host device 100 may check fields associated with the workload based on information set in advance with regard to a kind of the workload.

In operation S540, the host device 100 may check field values of fields associated with the workload in the data structure 230 associated with each of the plurality of storage devices 200_1, 200 2, ..., 200_n.

In operation S550, the host device 100 may determine a storage device, which will perform at least a portion of the workload, based on the field value(s).

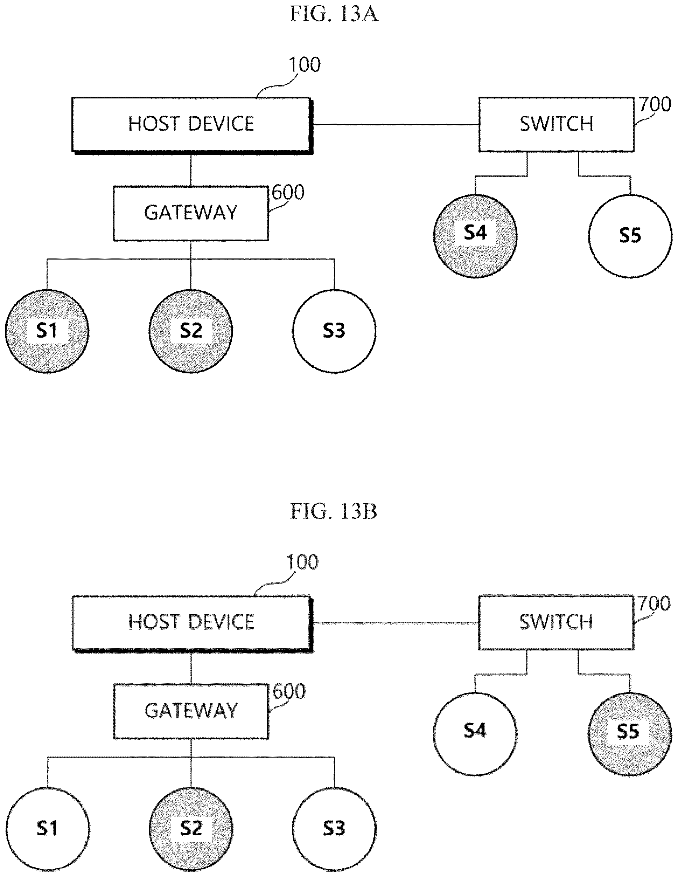

FIGS. 13A and 13B are diagrams describing how the host device 100 places a workload based on the example in FIG. 12. The host device 100 may correspond to the host device 100 described with reference to FIGS. 1 to 7. How the host device 100 places a workload will be described with reference to FIGS. 1 to 7, 11, and 13A and 13B.

Referring to FIGS. 13A and 13B, the host device 100 may be connected to storage devices S1, S2, and S3 through a gateway 600. Also, the host device 100 may be connected to storage devices S4 and S5 through a network switch 700. Network routing information of the storage devices S1, S2, and S3 connected through the gateway 600 may be different from network routing information of the storage devices S4 and S5 connected through the network switch 700. The network switch 700 may be the CXL switch 400 of FIG. 1. The host device 100 may be in a state of receiving the data structure 230 of FIG. 1 from each of the storage devices S1, S2, S3, S4, and S5.

Referring to FIG. 13A, the host device 100 may receive a request for an input/output workload with a high read ratio from an external device. Among multiple storage devices S1-S5, the host device 100 may determine the storage devices S1, S2, and S4 as storage devices that are suitable to perform the input/output workload with the high read ratio, based on the data structure 230 received from each of the storage devices S1, S2, S3, S4, and S5. The host device 100 may place a workload to each of the determined storage devices S1, S2, and S4. The placed workload may be a portion of the workload that is requested for the host device 100. In another example, the host device 100 may place a portion of the workload to at least some of the determined storage devices S1, S2, and S4 and may place another portion of the workload to at least one of the remaining storage devices S3 and S5. That is, a portion of a workload may be placed even to a storage device which is not determined as a group associated with a type of a requested workload. A placement ratio may be set in advance or may be determined based on an algorithm set in advance. The algorithm set in advance may be an algorithm which determines a placement ratio of a workload such that the efficiency with which the whole requested workload is performed is improved.

Referring to FIG. 13B, the host device 100 may receive a request for a workload requiring a processing operation from the external device. For example, the processing operation may be an operation of filtering data. The host device 100 may check a field value associated with a processing speed in the data structure 230 associated with each of the storage devices S1, S2, S3, S4, and S5 each including an accelerator. The host device 100 may determine the storage devices S2 and S5 as storage devices that will perform the requested workload and may place the workload to the storage devices S2 and S5.

Referring to FIGS. 13A and 13B, the host device 100 may differently determine storage devices suitable to perform a workload, based on a feature(s) of the workload. Accordingly, the efficiency with which a workload is performed may be improved.

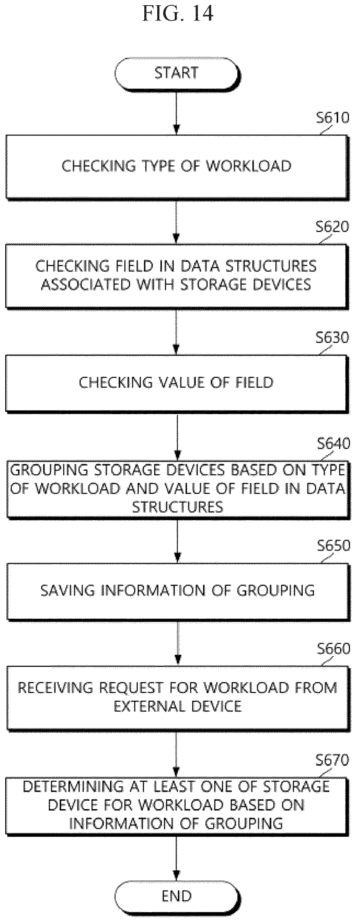

FIG. 14 is a flowchart illustrating an example of a method in which the host device 100 determines a storage device for the placement of a workload. A method in which the host device 100 determines a storage device may be performed by the host device 100 described with reference to FIGS. 1 to 7. A method in which the host device 100 determines a storage device will be described with reference to FIGS. 1 to 7, 14, 15, 16A, and 16B.

In operation S610, the host device 100 may check a type of a workload. When feature values of workloads associated with at least one feature are different, the workloads may be different types of workloads. For example, the type of the workload may include a read input/output workload, a write input/output workload, and a computation workload. Alternatively, a type of a read input/output workload and/or a write input/output workload may be subdivided depending on a read/write ratio.

In operation S620, the host device 100 may check fields of the data structure 230, which are associated with the type of the workload. For example, the computation workload which is associated with a routing item of the data structure 230 of FIG. 6 may be set in advance.

In operation S630, the host device 100 may check a field value of the data structure 230 of each of the storage devices S1, S2, S3, S4, and S5 with regard to the field associated with the type of the workload. For example, the host device 100 may check a value of each field of the routing item associated with the computation workload in the data structure 230 of each of the storage devices S1, S2, S3, S4, and S5.

In operation S640, the host device 100 may classify the storage devices S1, S2, S3, S4, and S5 into a plurality of groups based on at least one field associated with the type of the workload. In operation S650, the host device 100 may store grouping information of each of the storage devices S1, S2, S3, S4, and S5.

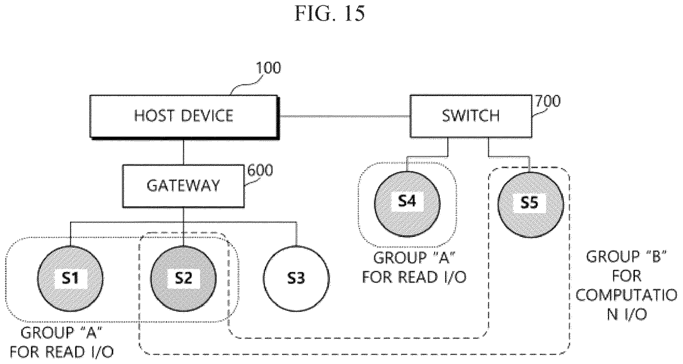

Referring to FIG. 15, for example, the host device 100 may determine the storage devices S1, S2, and S4 as group A associated with the read input/output workload and may determine the storage devices S2 and S5 as group B associated with the computation workload. One storage device may belong to a plurality of groups.

In operation S660, the host device 100 may receive a request for a workload from the external device; in operation S670, the host device 100 may place the requested workload to at least one of storage devices based on the grouping information.

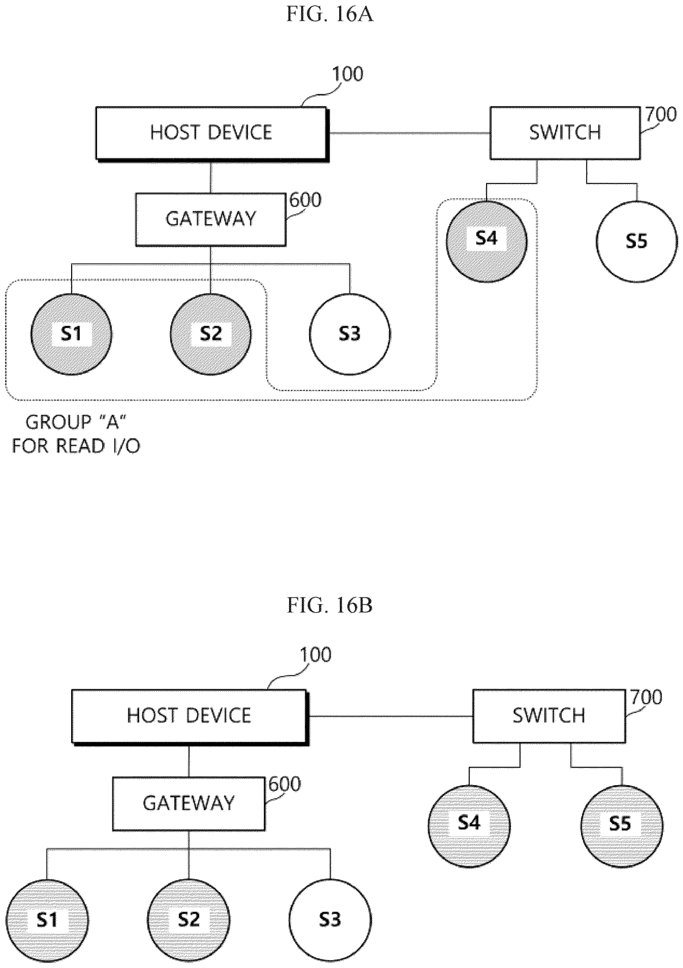

Referring to FIG. 16A, for example, the storage devices S1, S2, and S4 may be determined as group A associated with the read input/output workload.

Referring to FIG. 16B, the host device 100 may place the requested workload to the storage devices S1, S2, and S4 of group A and the storage device S5 not belonging to group A. In another example, the host device 100 may place the requested workload only to the storage devices S1, S2, and S4 of group A. Alternatively, the host device 100 may place a portion of the workload to some of the determined storage devices S1, S2, and S4 and may place another portion of the workload to at least one of the remaining storage devices S3 and S5. That is, a portion of a workload may be placed even to a storage device which is not determined as a group associated with a type of a requested workload. A placement ratio may be set in advance or may be determined based on an algorithm set in advance. The algorithm set in advance may be an algorithm which determines a placement ratio of a workload such that the efficiency with which the whole requested workload is performed is improved.

FIG. 17 is a diagram illustrating an example of a storage device and an example of a data structure.

Unlike the first storage device 200_1 of FIG. 1, a storage device 200_1a of FIG. 17 may include an accelerator 240.

Referring to FIG. 17, unlike the data structure 230 described with reference to FIG. 6, a data structure 231 of the storage device 200_1a includes an item COMPUTATION associated with the accelerator 240. The item COMPUTATION associated with the accelerator 240 may include a plurality of fields. The item COMPUTATION associated with the accelerator 240 may include at least one of a computation read bandwidth field READ BW, a read latency field READ LATENCY, a computation write bandwidth field WRITE BW, a computation write latency field WRITE LATENCY, a computation read/write ratio field RW RATIO, a computation usage ratio field USAGE RATIO, a computation block size field SIZE, and a computation speed field COMPLETE TIME.

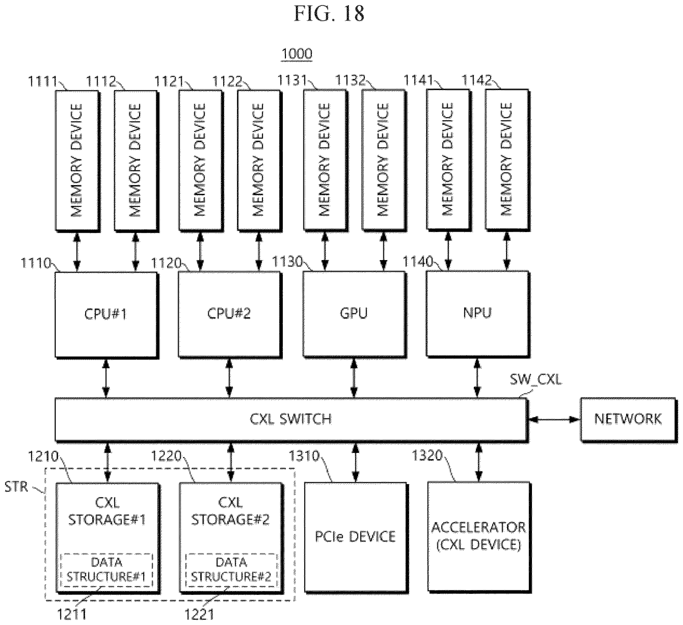

FIG. 18 is a block diagram illustrating a computing system. Additional description associated with the components described in detail with reference to FIGS. 1 to 17 will be omitted.

Referring to FIG. 18, a computing system 1000 includes a first CPU 1110, a second CPU 1120, a CPU 1130, an NPU 1140, a CXL switch SW_CXL, a first CXL storage device 1210, and a second CXL storage device 1220, a PCIe device 1310, and an accelerator 1320 being a CXL device.

The first CPU 1110, the second CPU 1120, the GPU 1130, the NPU 1140, the first CXL storage device 1210, the second CXL storage device 1220, the PCIe device 1310, and the accelerator 1320 may be connected in common to the CXL switch SW_CXL and may communicate with each other through the CXL switch SW_CXL.

In some implementations, each of the first CPU 1110, the second CPU 1120, the CPU 1130, and the NPU 1140 may be the host device described with reference to FIGS. 1 to 17, and individual memory devices 1111, 1112, 1121, 1122, 1131, 1132, 1141, and 1142 may be directly attached to the first CPU 1110, the second CPU 1120, the CPU 1130, and the NPU 1140.

In some implementations, each of the first CXL storage device 1210 and the second CXL storage device 1220 may be the storage devices described with reference to FIGS. 1 to 17. The first CXL storage device 1210 and the second CXL storage device 1220 may be used as a storage space STR by at least one of the first CPU 1110, the second CPU 1120, the CPU 1130, and the NPU 1140.

In some implementations, the first CXL storage device 1210 and the second CXL storage device 1220 may respectively construct data structures 1211 and 1221. The first CXL storage device 1210 and the second CXL storage device 1220 may transmit the data structures 1211 and 1221 to at least one of the first CPU 1110, the second CPU 1120, the GPU 1130, and the NPU 1140 through the CXL switch SW_CXL based on the CXL interface.

Each of the first CPU 1110, the second CPU 1120, the GPU 1130, and the NPU 1140 may place a workload to at least one of the first CXL storage device 1210 and the second CXL storage device 1220 based on the data structure 1211 and the data structure 1221.

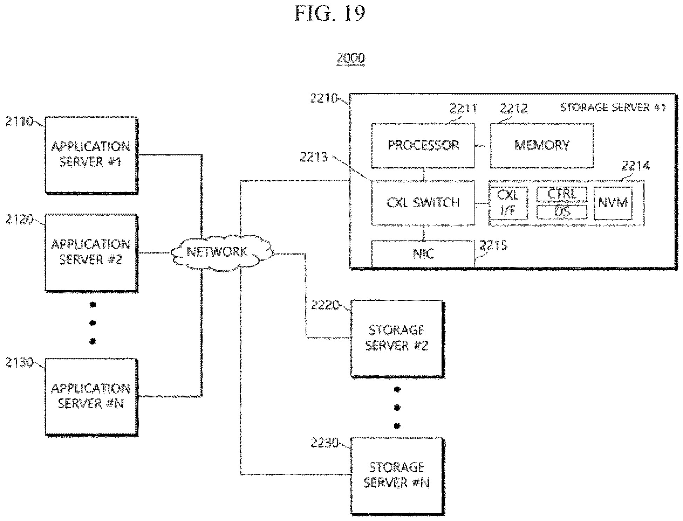

FIG. 19 is a block diagram illustrating an example of a data center to which a computing system is applied. Referring to FIG. 19, a data center 2000 which is a facility storing various data and providing services may be referred to as a "data storage center". The data center 2000 may be a system for the operation of a search engine and a database and may be a computing system used by companies, such as banks, or government agencies. The data center 2000 includes application servers 2110 to 2130 and storage servers 2210 to 2230. The number of application servers and the number of storage servers may vary, and the number of application servers and the number of storage servers may be different from each other.

Below, a configuration of the first storage server 2210 will be mainly described. The application servers 2110 to 2130 and the storage servers 2210 to 2230 may have similar structures. The application servers 2110 to 2130 and the storage servers 2210 to 2230 may communicate with each other over a network.

The first storage server 2210 may include a processor 2211, a memory 2212, a CXL switch 2213, a storage device 2214, and a network interface card 2215. The processor 2211 may control an overall operation of the first storage server 2210 and may access the memory 2212 to execute an instruction loaded to the memory 2212 or to process data. The memory 2212 may be implemented with a double data rate synchronous DRAM (DDR SDRAM), a high bandwidth memory (HBM), a hybrid memory cube (HMC), a dual in-line memory module (DIMM), an Optane DIMM, and/or a non-volatile DIMM (NVDIMM). The processor 2211 and the memory 2212 may be directly connected, and the numbers of processors included in one storage server 2210 and the number of memories included in one storage server 2210 may be variously selected.

The CXL switch 2213 may be configured to arbitrate or route the communications between various components included in the first storage server 2210. The CXL switch 2213 may be the CXL switch 400 described with reference to FIGS. 1 to 18. That is, the CXL switch 2213 may be a switch implemented based on the CXL interface.

The storage device 2214 may include a CXL interface circuit CXL_IF, a controller CTRL, and a nonvolatile memory device NAND. Depending on a request of the processor 2211, the storage device 2214 may store data or may output the stored data. The storage device 2214 may include a plurality of storage devices.

The controller CTRL of the storage device 2214 may construct a data structure DS. The data structure DS may be stored in a memory device (not illustrated). The data structure DS may include performance information and/or network routing information of the storage device 2214. The data structure DS may be the data structure 230 of FIG. 6 or the data structure 231 of FIG. 17. In some implementations, the data structure DS may include items associated with the performance information and/or the network routing information of the storage device 2214 in addition to the items described with reference to FIG. 6 and/or FIG. 17.

Based on the cache coherence protocol, at least one storage device 2214 may store the data structure DS in the memory 2212 of the storage server 2210 or may request the processor 2211 to store the data structure DS.

The processor 2211 may place at least some of workloads requested by the application servers 2110 to 2130 to the at least one storage device 2214 based on the data structure DS of the at least one storage device 2214 stored in the memory 2212.

According to the present disclosure, a storage device and a host device may perform a workload quickly and efficiently.

According to the present disclosure, an operating method of the storage device and an operating method of the host device may perform a workload quickly and efficiently.

While this disclosure contains many specific implementation details, these should not be construed as limitations on the scope of what may be claimed. Certain features that are described in this disclosure in the context of separate implementations can also be implemented in combination in a single implementation. Conversely, various features that are described in the context of a single implementation can also be implemented in multiple implementations separately or in any suitable subcombination. Moreover, although features may be described above as acting in certain combinations and even initially be claimed as such, one or more features from a combination can in some cases be excised from the combination, and the combination may be directed to a subcombination or variation of a subcombination.

## Claims

1. A method for operating a storage device (200_1) including a controller (300) and a nonvolatile memory (210), the method comprising:
constructing (S110), using the controller (300), a data structure (230) including at least one of (i) performance information of the storage device (200_1) or (ii) network routing information about a network in which the storage device (200_1) is located; and
transmitting (S120), from the controller (300) to a host device (100), the data structure (230) based on a cache coherence protocol.

2. The method of claim 1, wherein transmitting the data structure (230) comprises:
receiving, using the controller (300) and from the host device (100), a memory address of the host device (100), wherein the data structure (230) is configured to be stored at the memory address;
requesting, using the controller (300), a store authority for the memory address based on a compute express link.cache, CXL.cache, protocol; and
transmitting, from the controller (300) to the host device (100), the data structure (230) based on a response of the host device (100) to the request.

3. The method of claim 1 or 2, wherein transmitting the data structure (230) comprises:
receiving, using the controller (300) and from the host device (100), a memory address of the host device (100), wherein the data structure (230) is configured to be stored at the memory address;
transmitting, from the controller (300) to a device-to-host, D2H, request channel of a CXL.cache protocol, a D2H request message of a Read0-Write-type or a write-type, the D2H request message including the memory address; and
transmitting, from the controller (300) to the host device (100), a D2H data message through a D2H data channel of the CXL.cache protocol, the D2H data message including the data structure (230).

4. The method of claim 2 or 3, wherein the memory address includes a host physical address, HPA, obtained by translating, using an address translation service, ATS, of the host device (100), a virtual address, VA, of a memory device (120) of the host device (100).

5. The method of any one of claims 1 to 4, wherein the performance information includes at least one of input/output, I/O, performance, CXL.cache execution performance, CXL.mem execution performance, or accelerator computation performance of the storage device (200_1), and
wherein the network routing information includes information about a network structure between the storage device (200_1) and the host device (100).

6. The method of claim 5, wherein the network routing information includes a number of at least one of network switch, CXL switch, gateway, or domain name server, DNS, located on a message transmission path between the storage device (200_1) and the host device (100).

7. The method of claim 5 or 6, further comprising:
updating, using the controller (300), the data structure (230) based on the network structure between the storage device (200_1) and the host device (100) being changed; and
transmitting, using the controller (300) and to the host device (100), the updated data structure (230).

8. The method of any one of claims 1 to 7, further comprising:
receiving, using the controller (300) and from the host device (100), a workload based on the data structure (230); and
performing, using the controller (300), the workload.

9. A method performed by a host device (100) that is in data communication with a plurality of storage devices (200_1-200_n), the method comprising:
receiving (S410), by the host device (100) and from each of the plurality of storage devices (200_1-200_n), a data structure (230) based on a cache coherence protocol, the data structure (230) including at least one of (i) performance information or (ii) network routing information;
determining (S420), by the host device (100) and based on the data structure (230) of each of the plurality of storage devices (200_1-200_n), at least one storage device (200_1) from among the plurality of storage devices (200_1-200_n), the at least one storage device (200_1) being configured to perform a workload; and
assigning (S430), by the host device (100), the workload to the at least one storage device (200_1).

10. The method of claim 9, wherein receiving the data structure (230) comprises:
receiving, by the host device (100), the data structure (230) based on a compute express link.cache, CXL.cache, protocol; and
storing the data structure (230) in a memory device (120) attached to the host device (100).

11. The method of claim 9 or 10, where assigning the workload includes:
assigning, by the host device (100), the workload to the at least one storage device (200_1) based on at least one of a non-volatile memory host controller (300) express, NVMe, a CXL input/out, CXL.io, protocol, or a CXL memory, CXL.mem, protocol.

12. The method of any one of claims 9 to 10, wherein determining the at least one storage device (200_1) comprises:
checking, by the host device (100), a feature of the workload;
checking, by the host device (100), at least one field associated with the feature of the workload in the data structure (230) provided from each of the plurality of storage devices (200_1-200_n);
checking, by the host device (100), a field value stored in the at least one field in the data structure (230) of each of the plurality of storage devices (200_1-200_n); and
determining , based on a preset criterion of the field value, the at least one storage device (200_1) that is configured to perform the workload,
wherein the data structure (230) includes a plurality of fields associated with at least one of the performance information or the network routing information.

13. The method of any one of claims 9 to 12, wherein determining the at least one storage device (200_1) that is configured to perform the workload comprises:
classifying, by the host device (100), the plurality of storage devices (200_1-200_n) into a plurality of groups based on at least one of the performance information or the network routing information; and
assigning, by the host device (100), the workload to at least one group among the plurality of groups.

14. The method of claim 13, wherein classifying the plurality of storage devices (200_1-200_n) into the plurality of groups comprises:
checking, by the host device (100), a type of the workload;
checking, by the host device (100), at least one field associated with the type of the workload in the data structure (230) provided from each of the plurality of storage devices (200_1-200_n); and
classifying, by the host device (100), the plurality of storage devices (200_1-200_n) into the plurality of groups based on the at least one field associated with the type of the workload, and
wherein the data structure (230) includes a plurality of fields associated with at least one of the performance information or the network routing information.

15. The method of claim 13 or 14, wherein classifying the plurality of storage devices (200_1-200_n) into the plurality of groups comprises:
generating the workload based on requests of external devices; and
classifying the plurality of storage devices (200_1-200_n) into the plurality of groups based on the generated workload.
